# EUROPEAN PATENT APPLICATION

(11) **EP 0 724 369 A2**
(43) Date of publication of application: **31.07.1996**
(21) Application number: 96830011.1
(22) Date of filing: 15.01.1996
(51) Int. Cl.: H04Q 3/00, H04M 7/00

(54) **High reliability two-wire telecommunication network**

(30) Priority: 26.01.1995 IT MI950130
(71) Applicant: Russi, Franco, I-20124 Milano (IT); Russi, Massimo, 20124 Milano (IT)
(72) Inventor: Russi, Franco, I-20124 Milano (IT); Russi, Massimo, 20124 Milano (IT)
(74) Representative: Cicogna, Franco

(57) **Abstract**

The present invention relates to a two-wire telematic network, of high reliability, the main feature of which is that the network comprises two-wire connections, interconnecting a main center and a plurality of district centers, which form the concentration knots.

To each concentration knot are connected, through two wire connections, sector centers and urban net centers.

## Description

### BACKGROUND OF THE INVENTION

The present invention relates to a high reliability two-wire telematic network.

As is known, the so-called "dedicated" two-wire connections are at present considered as scarcely reliable, since they are of a poor quality and, accordingly, they can not be used in designing telematic networks and in all of those cases in which peripherical or terminal units must be coupled to a remote processor.

Two-wire connections are exclusively used for coupling to data banks on switching or switched networks, in which the use of the connection line is exclusively limited to the time necessary for transmitting data and the cost of which corresponds to that of a conventional telephone call.

In the case of a switched line, if the connection would be scarcely satisfactory, then it would be always possible to perform a new selection of the connection line, so as to obtain the desired qualitative result.

A typical example of a two-wire connection on a switching or switched network is that of the "fax", which, however, is frequently unsatisfactory for the user.

Just for such a service, providing frequently poor results, the concept have been consolidated that a data network would be reliable only if it would be made with four CDN or CDA wires.

In order to better focalize the problem, it should be pointed out that the overall national network is distributed according to a national telephonic plane, which provides for using star hierarchic connections, extending from the compartment center (CC), to the district center (CD), hence to the sector center (CS) to end at the urban net center (CRU).

The connection beams among the several centers are made by using digital type of transmitting apparatus (PCM), or frequency multiplexing analogic types of apparatus, even if the latter type of connections is at present increasingly abandoned.

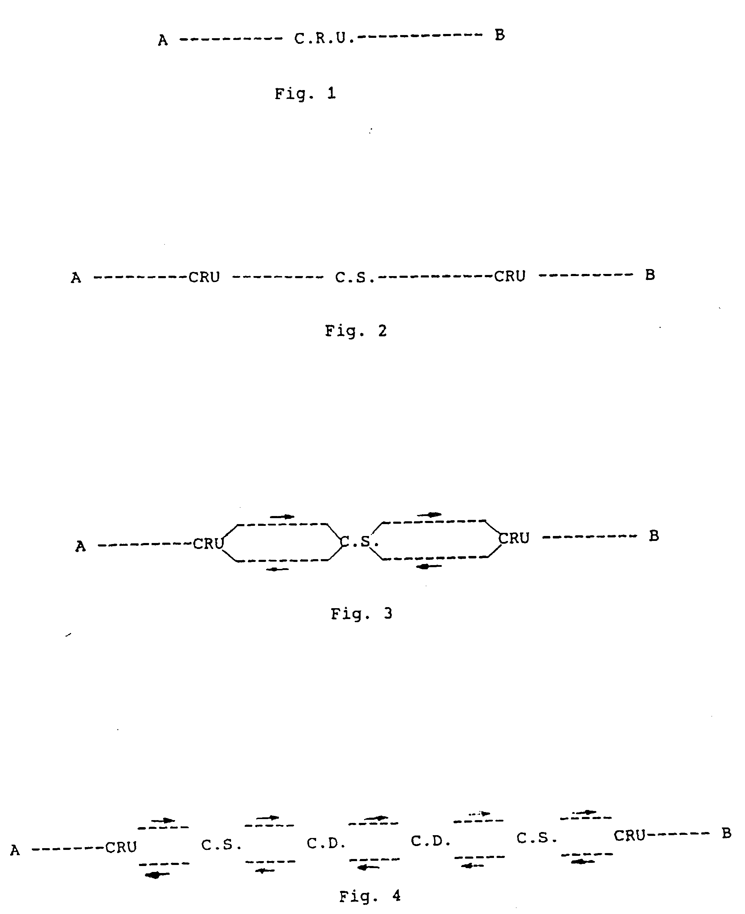

A telephonic connection is considered of an urban type, if the ends to be connected affect the same telephone sector, according to a diagram shown in the enclosed figure 1.

If the distance and path attenuation allow it, it is possible to provide a like connection exclusively with the copper conductors of the coupling cables.

The connection, in particular, can be performed by four base band wires, with digital type of modem's or by four analogic wires, with modem's in translated band.

With this type of connection, in which the amplitute attenuation and distortion are held within provided standards, the sole negative effect is the noise introduced into the coupling pairs through the connection path from an user to the telephone office, because of electromagnetic effects and because of cross-talk between the cable pairs.

Thus, and without considering the fact that an analogic signal is subjected to less deformations then a digital signal, it is possible to state that independently from the analogic or digital configuration of the connection, the negative effects related to the noise are the most significative and deleterious ones in order to provide a proper operation.

As known, the cross-talk and noise effects can occur on a cable forming pair, on all of the cable pairs, or on portions of the latter.

Accordingly, it is possible to affirm that the negative effect of the noise will be higher as the number of the pairs forming a connection increases.

In the light of the above, if the connection shown in figure 1 would be made by two wires, i.e. by a single pair, then the possibility of an operation affected by noise would be reduced to a half with respect a four-wire connection.

In the case of a sectorial connection, as shown in the diagram of figure 2, such a connection can be made by using convention transmitting means for coupling the sector center and two urban centers by digital systems and by exploiting the PCM technique.

In this case, the connection is modified as shown in figure 3.

Even in such a case, the most deleterious effect of the connection can be considered as caused by the noise induced on the path from an user to a telephonic office in A and from the telephonic office to the user in B, since the transmitting means, or PCM channels, would be transparent, with the exclusion of the quantization error introduced in a negligible manner into the digital types of modulating apparatus.

Then, also in this case, while considering the path CRU-CRU as not existing, the possibility remains that noise is introduced into the user queues, that is on the cable from the user to the telephone office or center.

Even in this case, a four-wire connection would have a double probability that noise would damage the data transmission.

In the interurban or trunk connections, that is that connections provided as the user places to be connected are arranged in sectors different from the same district or another district and/or compartments, the coupling is carried out according to the schematic diagram shown in figure 4.

In this arrangement, in addition to the noise effect, other negative effects must be considered, which have brought to think that a two-wire connection would be scarcely reliable.

The national communication network is continuously expanding from the analogic technique to the digital technique and, because of this reason, it would not be possible to exclude a priori that, in a connection like that shown in figure 4, would be absent cascade connections of communication paths with analogic transmitting apparatus and digital transmitting lengths.

Such an arrangement, anyhow negative, must be always discarded since a thus made connection would be qualitatively negative since transmission errors can occur therein, which can be caused by phase Jetter phenomena, in which the analogic path noises are summed-up, with a corresponding summing-up of the digital path quantization errors.

Thus, and considering the operation mode of the two-wire modem's, the transmitting quality of which is based on a comparative analysis of the echo generated on the transmitting media as a signal is transmitted thereon, the possibility of a high deformation of this echo because of the complexity of the system shown in figure 4, would be excessively high and such as to make this type of connection actually unreliable.

### SUMMARY OF THE INVENTION

From the above background, the aim of the present invention is to provide a two-wire telematic network of high reliability, the network being characterized in that it comprises two-wire connections inter-connecting a main center and a plurality of district centers, providing concentration knots, to each concentration knot being connected sector centers and urban net centers.

### BRIEF DESCRIPTION OF THE DRAWING

Further characteristics and advantages of the invention will become more apparent hereinafter from the following detailed description of a preferred, though not exclusive, embodiment of a high reliability two-wire telematic network which is illustrated, by way of an indicative, but not limitative, example, in the accompanying drawings, where:
Figure 1 represents a schematic diagram of an urban type of connection;
Figure 2 illustrates a schematic diagram of a sectorial type of connection;
Figure 3 illustrates a further schematic diagram of a sectorial type of connection performed by a PCM technique;
Figure 4 illustrates a further schematic diagram of a connection among users of a different district center;
Figures 5 to 8 illustrate four-wire connections between different places, with the same arrangement;
Figure 9 illustrates the two-wire connection according to the present invention, between those same places.

### DESCRIPTION OF THE PREFERRED EMBODIMENTS

With reference to the number references of the above mentioned drawing figures, the conventional existing network arrangements and the two-wire network arrangement according to the invention will be hereinafter compared.

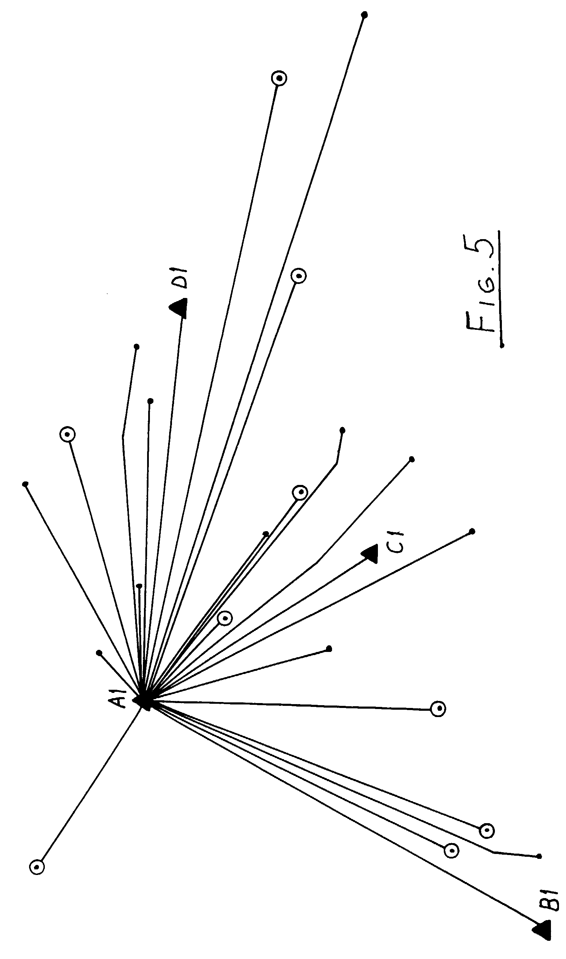

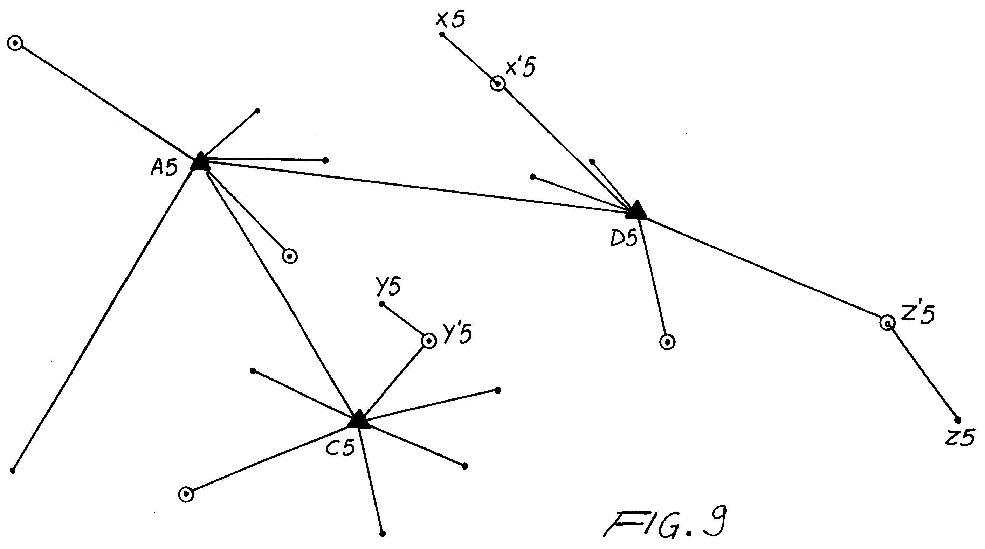

In order to better clarify the inventive idea, figures 5 to 9 clearly show the same places connected, as shown in figures 5 to 8, by four-wire connections according to the prior art and, with reference to figure 9, by the connection of those same places performed by the two-wire connection according to the invention.

It should be pointed out that the present information technique already provides at present teleprocessing types of solutions, in which the main or host center is exclusive for all of the other, and being located in a single place, which in all of the drawing figures has been indicated by the reference characters A1, A2 A5.

The main place will held therein all of the application and filing apparatus which are considered as necessary for the other places indicated in the several enclosed figures.

Because of this reason, it is necessary to request dedicated use connection lines for transmitting data.

The connections, in particular, may be of a point to point type, as shown in figure 1, or of a multi-point type, which provide, by suitably designed solutions, that a same gate or the host processor, located at A2, is time shared by several peripheral units or facilities simultaneously, as shown in figure 4.

In the diagram of figure 5, it should be apparent that each place is connected to the main or host center A1 by a dedicated line of the point to point type, with the advantage of a facilitated handling or managing, in which a malfunction at a place will not affect the other places, and with the possibility of providing, on the same lines and by using suitable apparatus, also auxiliary services such as alarms, audio communications and the like, and with the possibility of easily providing a line back-up, even if of a comparatively high cost.

In this case, one will have operating costs, i.e. telephonic costs, which would be excessively high.

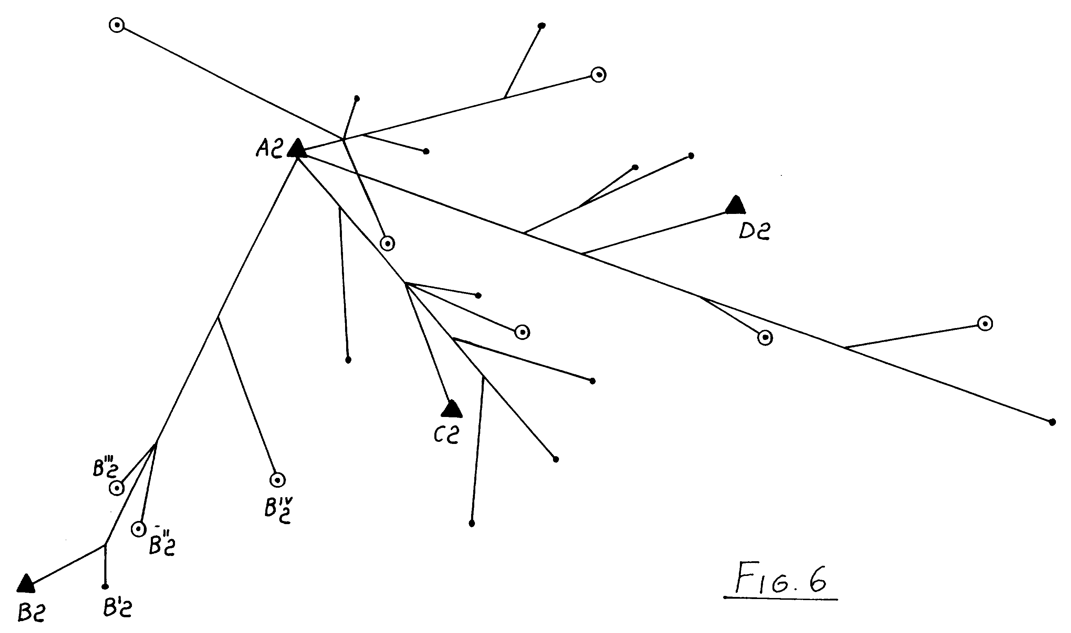

The multipoint network shown in figure 6 provides for performing connections between the main or host place A2 and the several peripheral units.

In actual practice, the places have been reunited in groups, by considering their geographic arrangements or locations.

In carrying the invention, in order to provide a multi-point branch, as shown in figure 6, the places or locations B2-B2'-B"-B"'-B2"" have been connected to a single gate of the central processor, so as to reduce the operation costs.

In this case, the overall cost will be given by the sum of the longest path A2-B2 with the addition of the several connecting branches for the locations or places B2'-B2"-B2"'-B"".

With the disclosed solution, the costs of the connection lines will be reduced, but with the following disadvantages with respect to the solution illustrated in figure 5: managing difficulty because of a difficult associated with the localization of a malfunction, reduced transmission speed or rate, because the line is always shared by the five places B2-B2'-B2"-B2"'-B2"", since, as one thereof communicates with the main or host center A2, the other must wait for in turn.

Moreover, there is the possibility that a disturbing effect, present on one of the branches, would negatively affect the operation of the other branches.

To the foregoing, the very great difficulty or impossibility to develop other added value services such as alarms and/or audiocommunications and the impossibility of providing a network back-up must be added.

The most modern technological developments have afforded the possibility of making concentrated peripheral unit networks, providing for a concentration of the peripheral places, for mutually closest geographic groups.

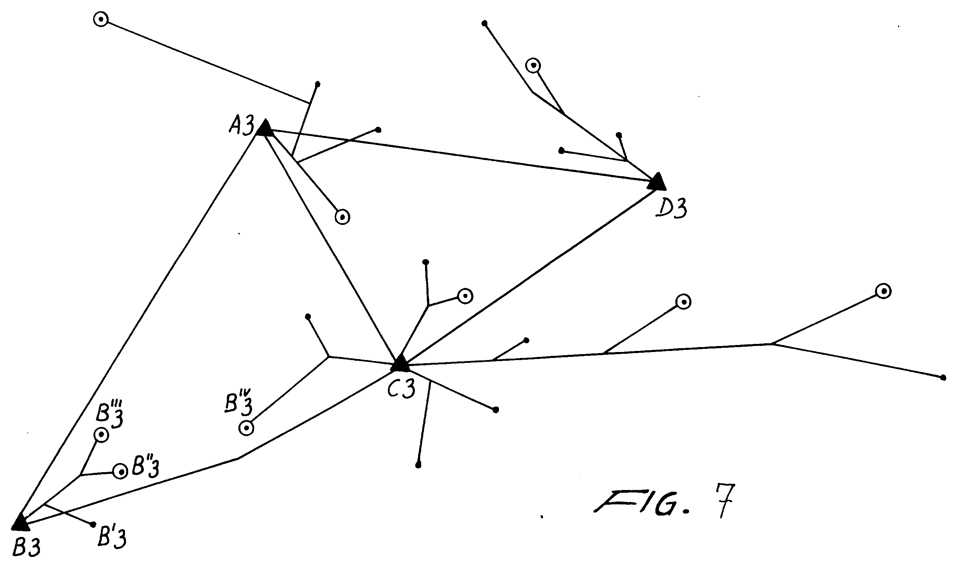

As it should be apparent, figure 7 shows four concentrating points A3-B3-C3-D3, thereon it would be possible to reunite the peripheral places.

In order to increase the reliability of the network, there are provided cross connection lines, such as the paths B3-C3 and C3-D3, in order to overcome possible interruptions on the primary paths A3-B3, A3-C3, A3-D3.

For example, if the path A3-C3 would be interrupted, then the data transmitted by the concentrator arranged at C3 would be able to reach A3, also through the cross path C3-D3, thereby providing the connection C3-D3-A3.

As it should be further apparent, in this case the overall project has been designed on several transmissive levers, of which the first level includes the connections between the concentrators A3-B3-C3-D3, and the second level the connection of the individual places to the closest concentrator.

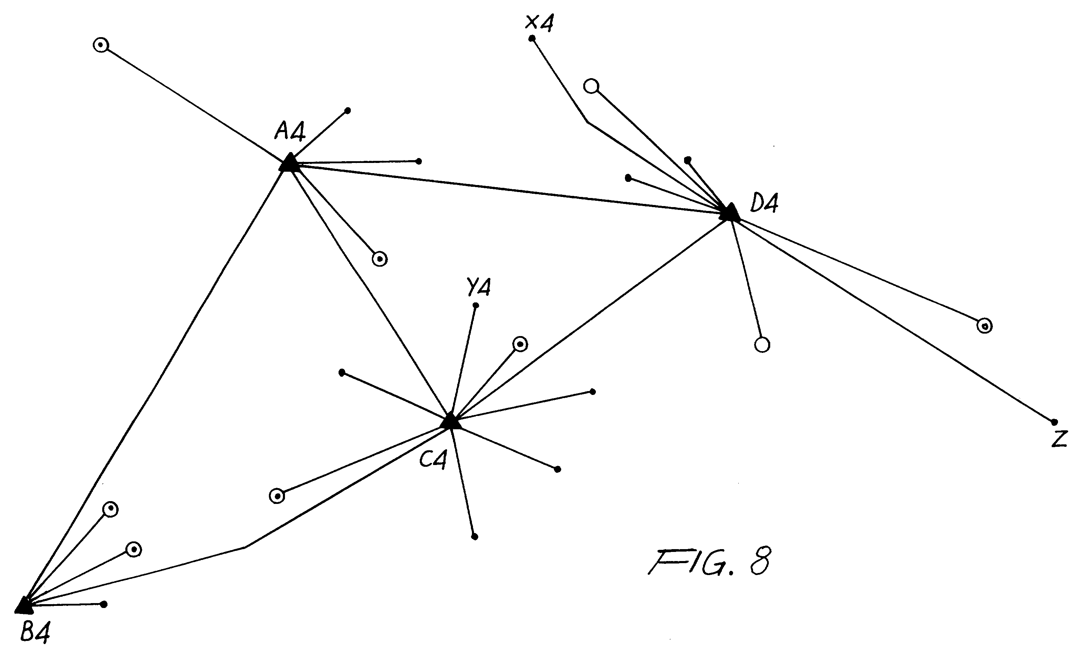

A like type of connection is also used in the solution shown in figure 8, in which the centers or places A4, B4, C4 and D4, in addition to be connected to one another, will provide a point to point type of connection, with the related sector center and urban network centers.

With respect to such a solution, an advantage is that partially related to the operation cost, but, frequently, the capital costs which would be necessary will be sufficiently covered by the reduction of the telephonic costs which can be obtained, even if not in a long term, since the reductions which can be obtained on the telephone renting costs will be frequently related to and will depend on the geographic arrangements of the places.

In fact, the first level network must be designed specifically, since, in addition to the fact that additional paths must be provided for making the cross connections B3-C3 and C3-D3, B4-C4 and C4-D4, it will be necessary to also consider the higher cost of the paths A3-B3, A3-C3, A3-D3. A4-B4, A4-C4, A4-D4.

The latter, in fact, if for fitting the traffic between the main centers A3 or A4 and the several main concentrators or centers A3 or A4 and the several district concentrators or centers would require data transmission speeds corresponding to N, in the case of a drop-out of one of the direct connection paths between the district centers and the host or main center, would require that the cross paths would be able of also supporting the traffic of the concentrator remained disconnected.

Because of the above cited reason, the connection paths among the district centers and host center, must be designed for rates or speeds corresponding to 2N, with a cost approximatively twice thant that of the actual operation requirements.

Also in this case, as for the embodiments of Figures 5 and 6, the second level can be designed by multi-point lines, as in figure 7, or by point to point lines, as in figure 8.

The selection of the two solutions will be based on merely economic factors, since also for these types of networks the same advantages of the preceding networks will be provided.

The places or locations B3'-B3"-B3"'-B"" have been grouped in a different manner, with respect to the diagram of figure 6.

More specifically, the places or locations B'-B"-B"' are abutted on the concentrator B", whereas B3"" is abutted on the concentrator C3.

The reason of the connection of B3"" to C3 is due to the fact that B3"" is a sector center of the district center C3 and, in the case of concentrator networks, it is most suitable, from an operation standpoint, that the connection would respect the national telephonic plane, since the kilometric distances between the several places would be absolutely negligible.

It should be apparent that, in the case of figure 8, the locations or places X4-Y4-Z4, so-called re-thrown, must be directly connected to the related concentrator X4 with D4, Z4 with D4, Y4 with C4, with longer and more expensive telephonic paths, since they are not made by CDN, because of the well known difficulty in managing the clocks.

With reference to figure 9, is herein shown the same situation as that of preceding drawings, but made by the two-wire system according to the present invention.

Even in this case, the peripheral concentrator methods has been adopted, said peripheral concentrators being indicated by B5, C5 and D5, which can be of any suitable types, such as knots, PAD, IBM37XX, intelligent branching elements, routers and the like.

The selection thereof will be exclusively determined by the service development type to be obtained.

The very reduced cost of the connection will justify any type of capital expense, and this will be very important due to the lot of the advantages obtained therefrom.

The architecture of the two-wire network must be considered as a basis for the development of all of the services, present and future, which one desires to obtain from a telematic network.

In fact, based on the mentioned architectures, it will be possible to specifically design, without complications, the data/acoustic signal transmission, since it will be sufficient to add apparatus adapted to bring together the bit of the data service and the bit identifying the phonic or acoustic signals.

The construction will be held unchanged, and the speed increase will be practically obtained without any additional costs.

Moreover, the addition of the alarms can be carried out by conventionally available devices, without affecting the net architecture.

By adding suitable apparatus or devices, it will be possible to provide a telematic network in which the information facilities are distributed through the several peripheral units or places, so as to allow a sharp separation of the two WAN-LAN worlds; even in this case, the network architecture will not require any modifications.

A thus made network can be controlled or managed in a very satisfactory manner, since it provides the managing controllers and the servicing operators of the lines of the apparatus with a very good visibility.

The main characteristics of the subject network can be resumed as follows.

More specifically, no interference among the several locations or places will occur, since the network is all made as a point ot point network, and possible troubles or noises of a path will not affect the other operating paths.

A malfunction can be localized in a very simple manner, since the network comprise a very reduced number of intermediate facilities and, moreover, since each branch can operate on an alternative line, with a switched type of connection, a malfunction can be easily detected and easily allocated either to the dedicated line or to the modem-terminal apparatus constituting the system.

Owing to the capillary subdivision of the subject network, it is possible to control the several places by the same operating staff of the managing Company, since the latter will have the servicing shops mainly arranged at the district centers with a district type of territorial competence.

As stressed, the main feature of the modem's constituting a two-wire network, is that they can operate both on two-wire dedicated connections, and on a conventional switched line for telephonic sets.

This connection can be performed in several manners: automatic, semi-automatic and manual, and the selection will depend exclusively on the safety degree to be given to the system.

It should be also pointed out that the back-up, in addition to having capital costs of zero, since no apparatus must be added to the preselected modem's, can have very reduced costs, during the continuous operation thereof, since the connection of the peripheral places to the related concentrators will involve exclusively telephonic connections of urban and/or sectorial types, and accordingly with very reduced tariffs.

On the contrary of the examples shown in figures 7 and 8, the two-wire network will not require any cross connections between the concentration knots, since the latter would be made by the same modem's in a switched line.

If, for example, one of the dedicated paths A5-B5, A5-C5, A5-D5 would be interrupted, then the same connection would be immediately recovered by the modem's at A5-B5-C5-D5, on switched lines.

An increase of the traffic on the network could be compensated for by the same modem's, by increasing the transmission rate or speed thereof.

In the case of an increasing operation traffic, it will be possible, upon reaching the existing limit for the two-wire modem's (28800 bit/sec), to develop or extend the main network by higher speed systems (CDN 48-64000 bit/sec) and the secondary or auxiliary network by the two-wire method.

The economic advantages associated with such an embodiment would correspond to an annual renting cost saving varying from 30 to 70%.

The necessary capital investment will be in average equal to the saving of the renting cost which would be obtained within 9-12 months of an effective operation of the two-wire network.

Moreover, owing to a greater manageability of the system, a very great reduction of the operating costs will be also obtained.

The fact is to be also pointed out that an elimination of a great reduction of possible troubles is also obtained, both with respect to the back-up and, mainly, since each connection is very simplified due to the fact that it is made either by passive components such as a telephonic cable, or by a reduced number of active components.

One example of this is the connection of the locations X5-Y5-Z5 which, differently from the connection of figure 8, can be made for their connection through the places X5'-Y5'Z5' with smaller length paths, and accordingly of less cost, but actually more reliable, since they are made by a single transmission channel.

The invention as disclosed is susceptible to several modifications and variations, all of which will come within the inventive idea scope.

Moreover, all of the details can be replaced by other technically equivalent elements.

In practicing the invention, the used materials, provided that they are compatible to the intended use, can be any, depending on requirements.

## Claims

1. A high reliability two-wire telematic network, characterized in that said network comprises two-wire connections interconnecting a main center to a plurality of district centers providing the concentration knots, to each concentration knot being coupled, through two-wire connections, sector centers and urban net centers.

2. A telematic network, according to Claim 1, characterized in that said urban net centers are connected to the sector centers by a two-wire connection.

3. A telematic network, according to the preceding claims, characterized in that troubles and/or noise in a path of said network do not interfere with the other operating paths of the network.

4. A telematic network, according to one or more of the preceding claims, characterized in that said two-wire network operates both based on two-wire dedicated connections and on a conventional line switched from an apparatus set.

5. A telematic network, according to one or more of the preceding claims, characterized in that said network does not comprise any cross connections among the concentration knots.

6. A two-wire telematic network, according to one or more of the preceding claims, characterized in that said network provides for the connection of two locations arranged in two different places obtained by a single reflection of data on two interconnected modem's.
